# EUROPEAN PATENT APPLICATION

(11) **EP 1 548 528 A1**
(43) Date of publication of application: **29.06.2005**
(21) Application number: 04258052.2
(22) Date of filing: 22.12.2004
(51) Int. Cl.: G05B 19/042

(54) **Controller managing system**

(30) Priority: 26.12.2003 JP 2003434678
(71) Applicant: FANUC LTD, Minamitsuru-gun, Yamanashi 401-0597 (JP)
(72) Inventor: Matsukura, Sadao, Room 5-302, FANUC, Minamitsuru-gun, Yamanashi, 401-0511 (JP); Hosaka, Takashi, Kanagawa, 258-0004 (JP); Mutai, Norinaga, Room 7-306, FANUC, Minamitsuru-gun, Yamanashi, 401-0511 (JP)
(74) Representative: Billington, Lawrence Emlyn

(57) **Abstract**

A controller managing system that enables a computer (1) of a managing device to efficiently perform communication processing with a plurality of controllers (3a-3c). These controllers (3a-3c) are connected via a network (2) to the monitoring computer (1) of the managing device. The monitoring computer (1) performs a power status determination task and a monitoring task. Each controller (3a-3c) transmits power-ON information representing a power ON state to the monitoring computer (1) at prescribed intervals. When the power status determination task cannot receive the power-ON information within a predetermined time period from any one of the controllers (3a-3c), it is determined that the power supply to that controller is OFF. The monitoring task skips the controller that is determined as being in a power OFF state, so as not to receive data therefrom, and communicates with the next controller that is in a power ON state. Since the controller whose power is OFF is skipped so as not to perform data reception communication therewith, time for wasteful timeout processing is unnecessary and efficient communication can be achieved.

## Description

### BACKGROUND OF THE INVENTION

### 1. Field of the Invention

The present invention relates to a controller managing system comprising a plurality of controllers and a managing device that is connected through a network to the controllers for managing them and for executing a plurality of applications to perform processing in cooperation with the controllers.

### 2. Description of Related Art

Generally in a production system or the like, controllers are used to control various machines and apparatuses, such as for example, a CNC (computer numerical controller) or a robot controller for controlling a robot. In order to achieve more effective production, these controllers are connected via a communication network to a managing device comprised of a computer (personal computer). The managing device cooperates with application softwares (applications) running thereon to perform management of the controllers. Used as the network is a bus-connected network, such as Ethernet (trademark), through which a plurality of controllers are connected.

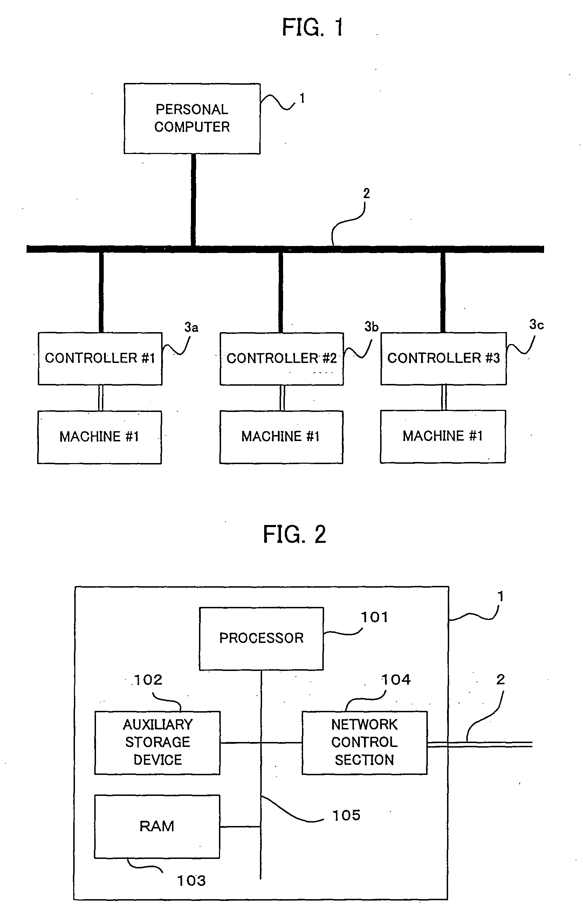

For instance, FIG. 1 shows an example of this type of managing system in which a managing device (personal computer) 1 is connected through an information network 2 such as Ethernet (trademark) to controllers 3a-3c such as CNC's for controlling respective machine tools or the like, robot controllers for controlling respective robots, etc.

The managing device 1, connected via the information network 2 to the controllers 3a-3c such as CNC, robot controller, etc. is adapted to perform information exchange. Specifically, the managing device 1 receives and displays NC programs for the controllers and data including operating status information, maintenance information, etc. of a robot, and sends data back to the controllers. These processing in the managing device 1 is performed by various applications.

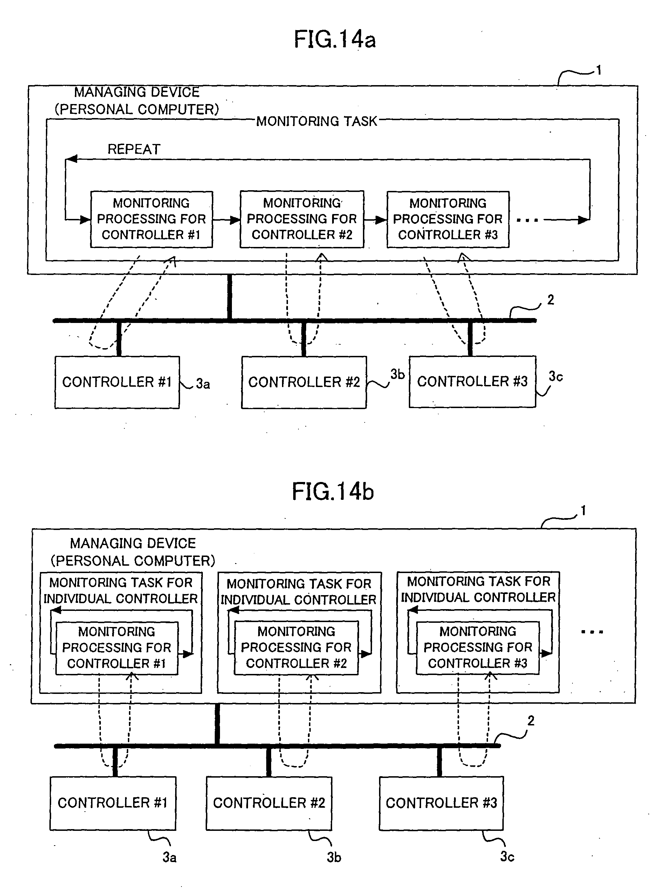

FIGS. 14a and 14b show systems that are conventionally adopted in a managing system having a managing device whose computer regularly communicates with various controllers to acquire pieces of information thereon and monitor the controllers. In the known example of FIG. 14a, a monitoring task running on the monitoring computer (host computer) of the managing device is formed by a single monitoring task that sequentially communicates with all the controllers to receive data therefrom. In the known system shown in FIG. 14b, the monitoring computer activates monitoring tasks, one for each controller. Each of the monitoring tasks independently receives data from a corresponding one of the controllers.

There is further known an invention (see JP 9-62415A) having a monitoring unit adapted to monitor a monitored unit via a network. In order to detect whether or not the monitored unit is in an abnormal condition or in a power OFF condition, a power monitoring unit is connected to the monitored unit and to the network. If there is no response even when the monitoring unit inquires about the status to the monitored unit, the monitoring unit inquires about power status to the power monitoring unit to receive a response indicating whether electric power is either ON or OFF, and determines whether or not the monitored unit is in an abnormal condition or a power OFF condition.

In the case of managing a large number of controllers (several tens) by means of the computer of the monitoring unit, the following problems are caused when the power supply to any one of the large number of controllers is cut OFF.

In the known example shown in FIG. 14a, the single monitoring task performs communication between all the controllers and the computer of the managing device, and therefore, when the power supply to more than one controller is OFF, much time is needed to carry out timeout processing to check for communication failure one by one for these controllers. This results in increase in the number of cycles required to monitor all the controllers.

In the known example shown in FIG. 14b, the monitoring computer activates monitoring tasks (one for each controller), and thus these tasks increases in number as the number of the controllers connected to the computer increases, resulting in overload of the monitoring computer.

### SUMMARY OF THE INVENTION

The present invention provides a controller managing system which enables a computer of a managing device to efficiently perform communication processing with a plurality of controllers.

According to an aspect of the present invention, a managing system comprises: a plurality of controllers for controlling respective machines; and a managing device connected to the controllers through a network for monitoring statuses of the controllers by reading information on the controllers through the network. Each of the controllers includes transmission means for transmitting power-ON information indicating power-ON status to the managing device at predetermined intervals while power of the controller is turned ON, and the managing device determines power-OFF status for a controller from which the power-ON information has been received within a predetermined time period and skips reading of information on the controller which is determined to be power-OFF status. The managing device starts reading of information on the controller which has been determined to be power-OFF status when the power-ON information is received from the controller.

According to another aspect of the present invention, a managing system comprises: a plurality of controllers for controlling respective machines; a managing device connected to the controllers through a network for monitoring statuses of the controllers by reading information on the controllers through the network; and a relay device provided between the controllers and the managing device. Each of the controllers includes transmission means for transmitting power-ON information indicating power-ON status to the relay device at predetermined intervals while power of the controller is turned ON, the relay device determines power ON/OFF status of each of the controllers based on where or not the power-ON information has been received therefrom within a predetermined time period, and makes a notification of a change of the power ON/OFF status of any of the controllers to the managing device, and the managing device skips reading information on the controller of power-OFF status according to the notification from the relay device. The managing device starts reading of information on the controller which has been determined to be power-OFF status when a change of the power ON/OFF status is notified from the relay device.

Each of the controllers may include means for setting the interval at which the power-ON information is transmitted, means for attaching additional information to the power-ON information, and means for setting a condition on which the additional information is transmitted with the power-ON information.

According to a further aspect of the present invention, a managing system comprises: a plurality of controllers for controlling respective machines; and a managing device connected to the controllers through a network for monitoring statuses of the controllers by reading information on the controllers through the network, wherein the managing device performs; a monitoring task of communicating with the controllers in a list of managing task objects and removing a controller from which any data are not received from the list of the monitoring task objects and recording the controller in a list of reconnection task objects, and communicating with only the controllers included in the list of the monitoring task objects to receive the information therefrom, and a reconnection task of communicating with each of controllers included in the list of the reconnection task objects and recording a controller from which the information are received successfully in the list of the monitoring task objects.

With the above arrangements of the present invention, since the managing device recognizes the power ON/OFF status of each of the plurality of controllers in communicating with the controllers, an occurrence of a communication timeout, which is caused when the managing device communicates with a controller in power OFF status, is prevented to efficiently monitor statuses of the controllers in a constant cycle.

### BRIEF DESCRIPTION OF THE DRAWINGS

FIG. 1 is a view showing the construction of a controller managing system used in each embodiment of the present invention;
FIG. 2 is a block diagram showing essential part of a personal computer serving as a host computer used in each embodiment;
FIG. 3 is a block diagram showing essential part of a numerical controller which is an example of a controller used in each embodiment and essential part of a machine tool controlled by the numerical controller;
FIG. 4 is a view for explaining an example of power-ON information and additional information that are transmitted from each controller to the host computer in each embodiment when the controller is in power ON status;
FIG. 5 is a view for explaining operations in a first embodiment of the present invention;
FIG. 6 is a flowchart of a power status determination task in the first embodiment;
FIG. 7 is a flowchart showing cooperation of a monitoring task and the power status determination task in the first embodiment;
FIG. 8 is a view for explaining operations in a second embodiment of the present invention;
FIG. 9 is a flowchart showing cooperation of a notification task and a power status determination task that are performed by a relay computer of the second embodiment;
FIG. 10 is a flowchart of a monitoring task of a host computer in the second embodiment;
FIG. 11 is a view showing operations in a third embodiment of the present invention;
FIG. 12 is a flowchart of a monitoring task in the third embodiment;

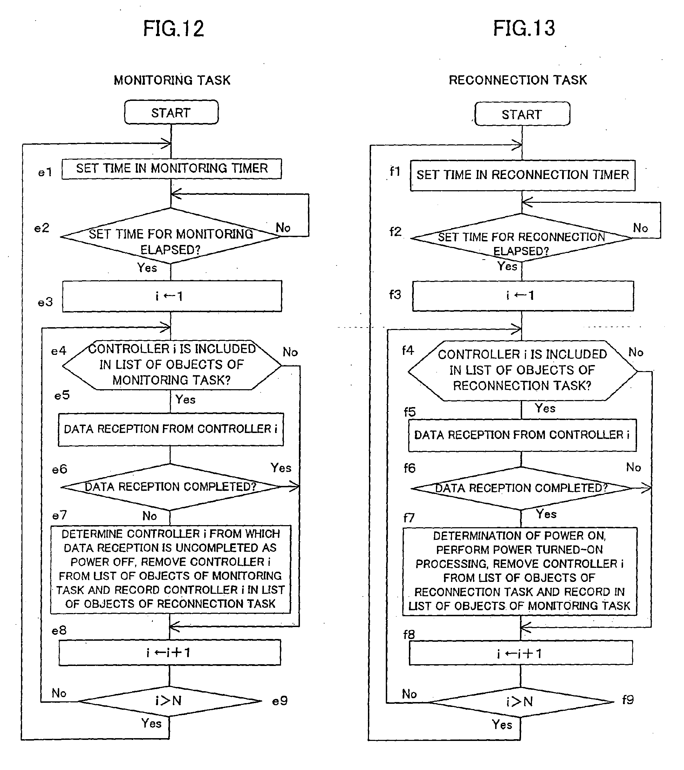

FIG. 12 is a flowchart of a reconnection task in the third embodiment; and
FIGS. 14a and 14b are views for explaining conventional controller managing systems.

### DETAILED DESCRIPTION

FIG. 1 is a structural view of a controller managing system used in each embodiment of the present invention.

A monitoring computer (personal computer) 1 serving as a managing device is connected through a network 2 to a plurality of controllers 3a-3c for controlling various machines and apparatuses such as a CNC for controlling a machine tool, a robot controller for controlling a robot, and the like.

FIG. 2 is a block diagram of essential part of the personal computer serving as the monitoring computer 1 constituting the managing device in each embodiment. The managing device (personal computer) 1 comprises a processor 101, an auxiliary storage device 102, a RAM 103, and a network controller 104 that are connected to one another by means of a bus 105.

The auxiliary storage device 102 stores a system program and various control application programs. The processor 101 reads the control application programs stored in the auxiliary storage device 102, and executes these programs. At this time, the RAM 103 is used as a working memory.

Included in the application programs are an application used for processing of receiving pieces of power-ON information from the controllers 3a-3c, a table for setting time periods, one for each controller 3a, 3b, or 3c, each time period being used to determine that the power OFF status of the corresponding controller is reached when the time period has elapsed, and an application for monitoring the controllers 3a-3c.

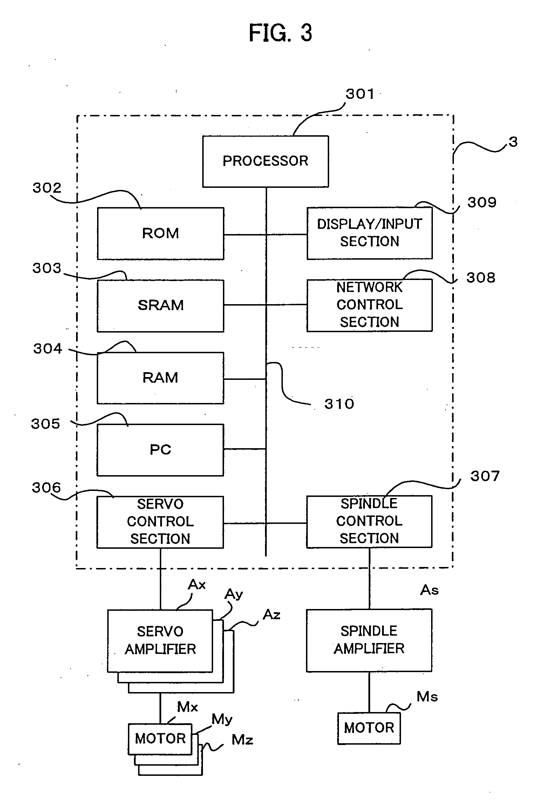

FIG. 3 is a block diagram showing an example of the numerical controller, which is an example of the controller 3 (3a, 3b, or 3c). FIG. 3 also shows essential part of the numerical controller and essential part of a machine tool controlled by the numerical controller.

The numerical controller 3 (3a, 3b, or 3c) comprises a processor 301, a ROM 302, an SRAM 303, a RAM 304, a PC (programmable controller) 305, a servo control section 306, a spindle control section 307, a network control section 308, and a display/input section 309, including a display unit comprised of LCD or CRT and a keyboard, which are connected by means of a bus 310. The processor 301 reads the system program stored in the RAM 302, and in accordance with the system program, controls the entirety of the numerical controller. The RAM 304 stores temporary calculation data. The PC 305 exchanges signals with sensors, actuators, and peripheral equipment of the machine, and performs a sequence control for the machine.

The servo control section 305 comprised of a processor, memories such as ROM and RAM, and the like receives those motion commands for respective feed axes of the machine (in this example, it is assumed that mutually perpendicular X, Y, and Z axes (feed axes) are provided) which are delivered from the main processor 301 of the numerical controller 3 in accordance with a machining program, thereby driving axis servomotors Mx, My, and Mz through respective servo amplifiers Ax, Ay, and Az. In accordance with a speed command supplied from the processor 301, the spindle control section 307 drives a spindle motor Ms through a spindle amplifier As to rotate the spindle. As described above, the controller has the same construction as that of a known controller.

The system program includes a step for setting the interval of transmission of power-ON information that is transmitted when electric power is ON, a step for making the setting to enable transmission of arbitrary information on the controller, a step for setting a condition in which the transmission of the arbitrary information on the controller is to be performed, a step for saving contents of these setting into the SRAM, and a step for reading the setting from the SRAM and for transmitting power-ON information at least when electric power is ON.

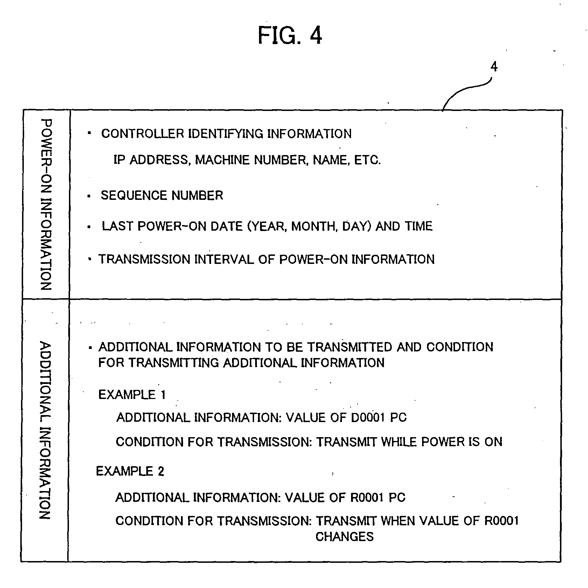

FIG. 4 is an example of the power-ON information and additional information that are transmitted to the managing device (monitoring computer) 1 when each controller 3a, 3b, or 3c is in power ON status. The power-ON information includes: controller identifying information such as IP address, machine number, name, and the like; a sequence number provided in the order of transmission of power-ON information; a last power-on date and time (year, month, day and time of present power-on); and an interval of transmission of power-ON information. Suitable as the additional information is information whose value changes less frequently, such as machining completion information on long-time machining. As for CNC information that changes less frequently, the monitoring computer is not required to regularly read a value of the CNC information. By not regularly reading the value, load on the network can be decreased. In a case where no transmission condition is set, the set additional information is transmitted together with the power-ON information. In the case of a transmission condition being set, the additional information is transmitted together with the power-ON information only when the transmission condition is satisfied. In Example 1 shown in FIG. 4, a value stored in D0001 region of the PC 305 is always transmitted as the additional information together with the power-ON information. In Example 2, a value stored in R0001 region of the PC is transmitted as the additional information together with the power-ON information when there is a change in the value of the R0001 region. The aforementioned various setting can be performed by the controller 3a, 3b, or 3c, or by the managing device (monitoring computer) 1 by way of the network 2.

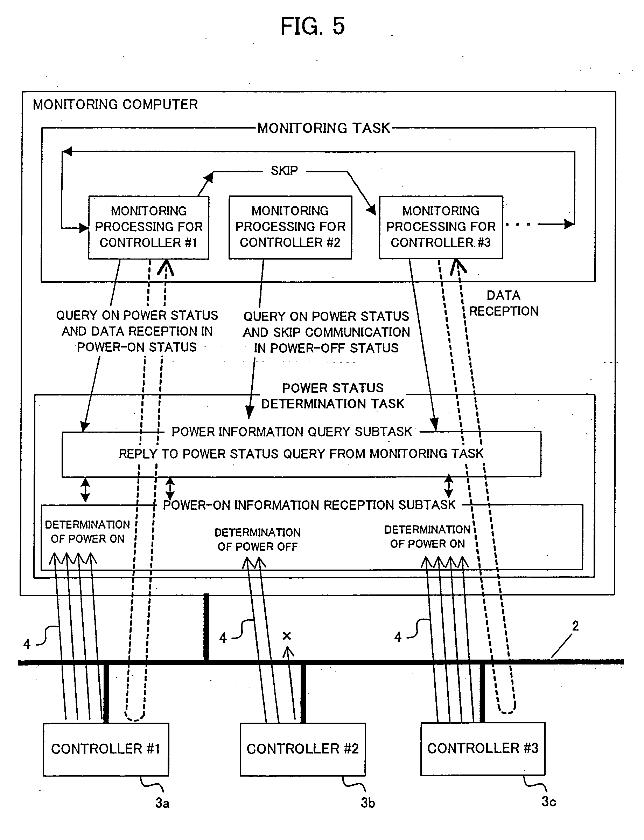

FIG. 5 is a view for explaining a first embodiment of the present invention and for explaining operations of a monitoring task of the monitoring computer 1 to monitor each controller 3a, 3b, or 3c in cooperation with a power status determination task.

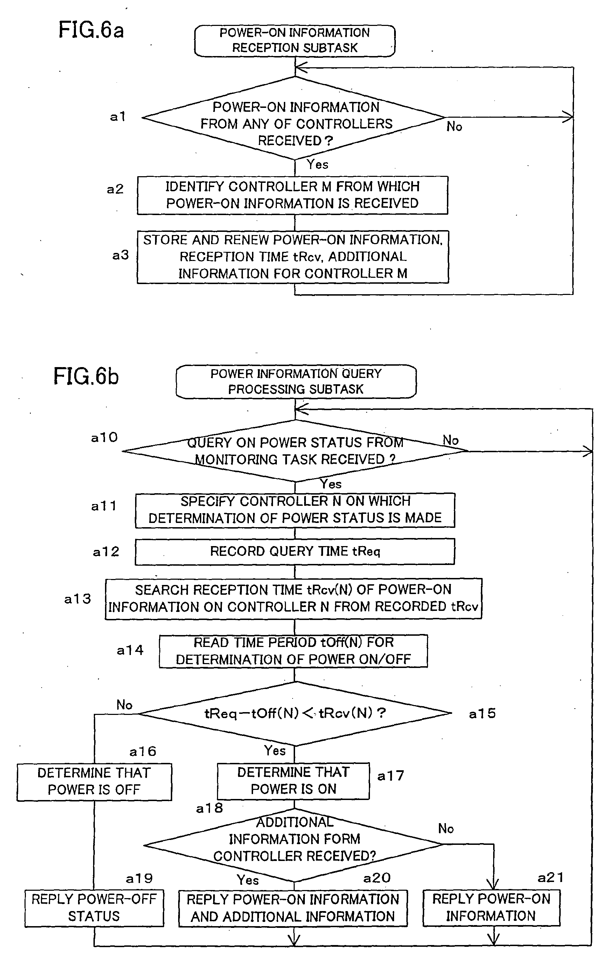

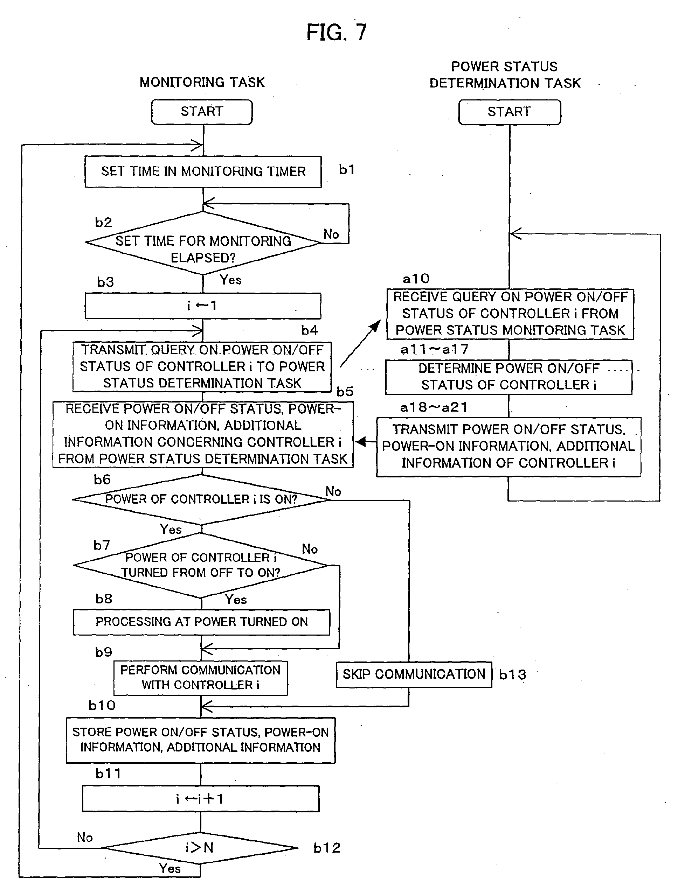

FIG. 6 shows an algorithm of the power status determination task in the first embodiment, in which the monitoring computer 1 receives power-ON information 4 to determine the power ON/OFF status. FIG. 7 shows an algorithm that is performed at intervals of a reading cycle in the monitoring task processing of the first embodiment shown in FIG. 5.

To enable the monitoring task to receive the power-ON information 4 for power ON/OFF determination, without waiting, from the controllers 3a-3c, a power status determination task is performed independently of the monitoring task. The monitoring task makes a query to the power status determination task in order to acquire the power status of each controller 3a, 3b, or 3c. There is a feature in that skip processing is performed for that controller which is in power OFF status, so as not to perform data receiving processing with such controller.

The power status determination task is comprised of two tasks, a power-ON information reception subtask and a power information query processing subtask.

The power-ON information reception subtask monitors a communication line used to receive the power-ON information from any one of the controllers, and waits for receipt of the power-ON information (Step a1). When the power-ON information is received, a controller M from which the power-ON information is transmitted is identified based on content of the power-ON information (Step a2), and the received power-ON information 4 corresponding to the controller M is stored and renewed. When additional information is received, the received additional information is also stored and renewed. Furthermore, time of receipt tRcv is stored and renewed (Step a3). When no power-ON information is received, the processing in Steps a2 and a3 is not performed, so that the renewal of the power-ON information, additional information, and time of receipt tRcv is not carried out.

The power information query processing subtask waits for receipt of a query on power information from the monitoring task (Step a10). When there is a request for query from the monitoring task, a controller N whose power ON/OFF status is to be determined is specified based on content of the request for query (Step a11), and time of query tReq is recorded (Step a12). Further, the time of receipt tRcv(N) of power-ON information from the controller N, which was received and held by the power-ON information reception subtask, is searched for (Step a13), and a time period tOff(N) is read that is set for the controller N for which the request for query is made for use in determining the electric power to the controller N is ON or OFF (Step a14). The time period tOff used to determine ON/OFF of the power supply is variably set in advance for every controller. Next, a determination is made whether or not a point in time obtained by subtracting the set time period tOff(N) from the time of query tReq is antecedent to the time of receipt tRcv(N) (Step a15). If the power-ON information reception subtask has not received and held the power-ON information 4 from the controller in question within the set time period tOff(N), it is replied that the power supply is OFF (Steps a16 and a19). If the power-ON information has been received and held within the set time period tOff(N), the content of the power-ON information 4 is notified to the effect that the power supply is still ON at the present time. If the additional information has been received, the additional information is also notified (Steps a17, a18, a20, and a21).

In the monitoring task, a comparison can be made between power-on dates in year, month, day, and time format that are respectively included in two pieces of power-ON information, thereby determining whether the power supply to the controller has been restored within a given time period. This enables the monitoring task to perform processing that is only required at power supply restoration.

FIG. 7 shows an algorithm performed at intervals of a reading cycle by the monitoring task of FIG. 5.

In one reading cycle, the monitoring task communicates with all the controllers in sequence to thereby acquire the statuses of the controllers.

First, predetermined time is set in a monitoring timer and started (Step b1). When the set time elapsed (Step b2), an index i is set to "1" (Step b3), and a query on the power ON/OFF status of the controller i is transmitted to the power status determination task (Step b4). In the power status determination task, the query is received at Step a10 of FIG. 6 as mentioned above, and a reply is given to the monitoring task in the processing at Steps a11-a21. The monitoring task receives the information of power ON/OFF status, power-ON information, and additional information (Step b5).

Next, whether or not the power supply to the controller i is ON is determined (Step b6). If the power is not ON, communication with the controller i is not performed but is skipped, so as not to receive data therefrom (Step b13). Whereupon the flow proceeds to Step b10. If the power is ON, a determination is made whether the power was OFF when the preceding query was made and the power supply is turned ON in the present cycle (Step b7). If it is determined that the power was ON also in the preceding cycle, the communication with the controller i is performed to receive data (Step b9). If the power was OFF in the preceding cycle but is ON in the present cycle, processing at power supply restoration is performed (Step b8), and then the communication with the controller i is performed for data reception (Step b9). Next, the power ON/OFF information, power-ON information, and additional information on the controller i are stored (Step b10), and the index i is incremented by one (Step b11). Then, whether or not the index i exceeds the number N of the controllers connected to the system is determined (Step b12). If not so, the flow returns to Step b4, and the processing at Step b4 and subsequent steps is carried out. After completion of query on the power ON/OFF of all the controllers, the flow returns to Step b1 and waits for the next query.

The above is the operation processing of the first embodiment, in which the controller whose power is OFF is skipped so that the monitoring computer does not communicate with such controller, and a shift is made to the next controller. This makes it possible to prevent the monitoring time of the controllers from being prolonged.

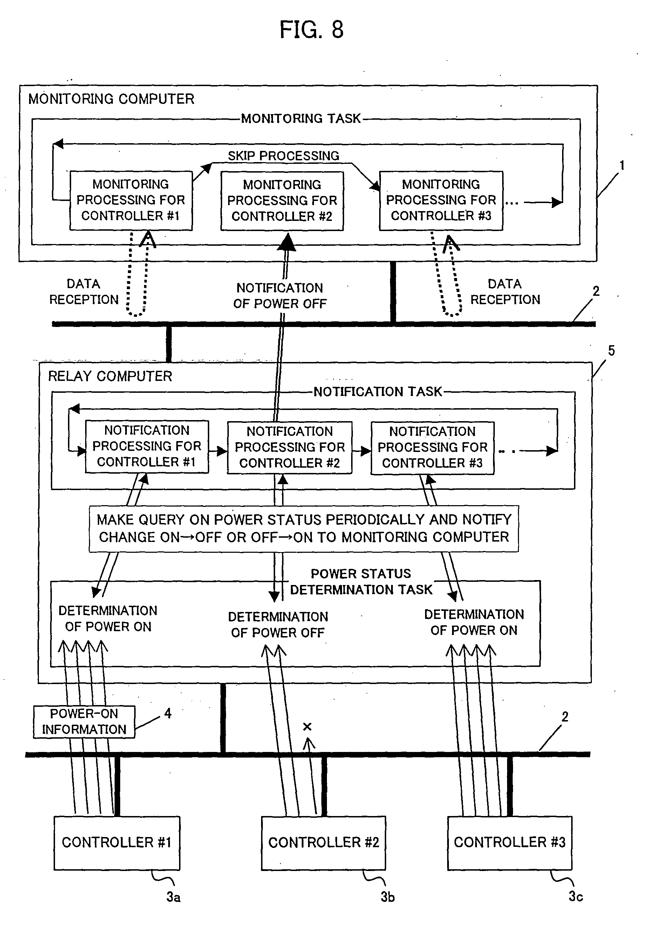

FIG. 8 is a view for explaining a second embodiment of the present invention. In the second embodiment, a relay computer 5 serving as a relay device is disposed near the controllers 3a-3c for the reason that pieces of power-ON information cannot be transmitted from the controllers 3a-3c to the monitoring computer 1 due to conditions of the network 2. The relay computer 5 receives the power-ON information, and gives a notification to the monitoring computer 1 only when the state of the power supply to either one of the controllers 3a-3c changes from ON to OFF or from OFF to ON. Thus, the monitoring task running on the monitoring computer 1 monitors the controllers 3a-3c only when the power to the controllers is ON.

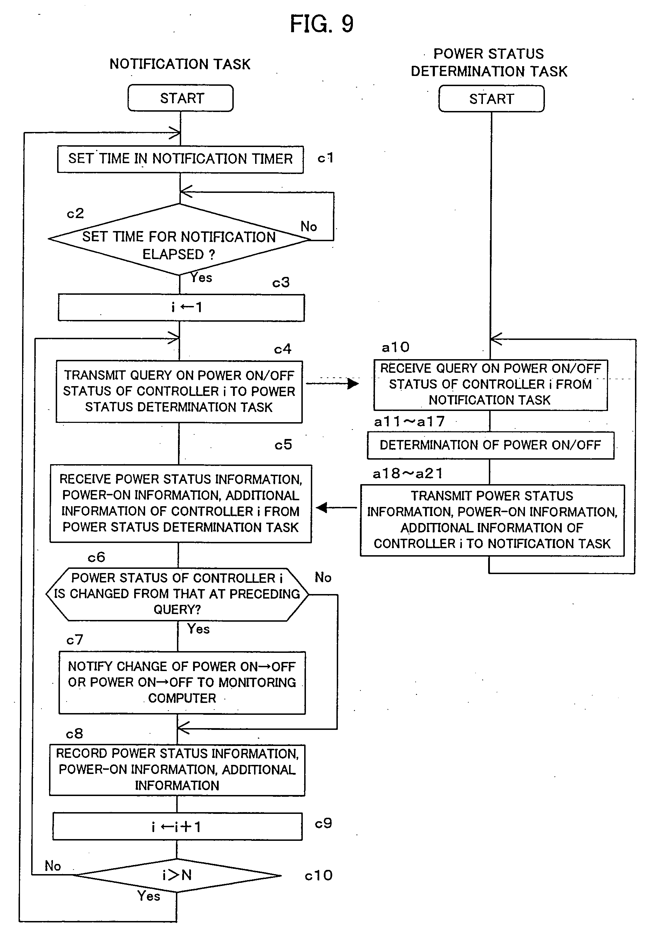

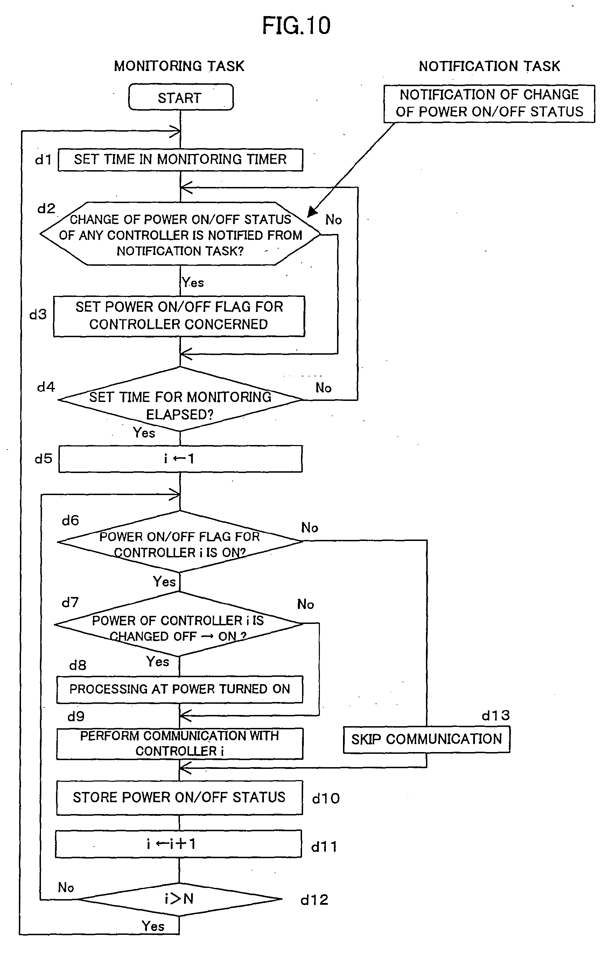

FIG. 9 shows an algorithm of processing performed by the relay computer 5 in the second embodiment to notify that the power state changes from ON to OFF or from OFF to ON, and FIG. 10 shows an algorithm of monitoring task processing performed by the monitoring computer 1 in the second embodiment. In the meantime, the power status determination task is the same as that of the first embodiment. Shown in FIG. 9 is part of the power status determination task, which relates to the notification task.

The notification task periodically inquires the power status determination task about the power statuses of all the controllers, and notifies the monitoring computer of a power status change when there occurs a change from ON to OFF or from OFF to ON in the power status of any one of the controller. The notification task includes processing at Steps c1-c5 that is the same as the processing at Steps b1-b5 in the monitoring task shown in FIG. 7 of the first embodiment, and an explanation thereof will be omitted.

When a reply indicating the power ON/OFF status of the controller i is received from the power status determination task, whether or not there is a change in the power status between the preceding and present queries is determined (Step c6). Only when there occurs a change, the monitoring computer 1 is notified of a state of change from ON to OFF or from OFF to ON (Step c7). Then, the power ON/OFF status, power-ON information, and additional information that are received are stored (Step c8), and the index i is incremented by one (Step c9). Next, whether or not the index i exceeds the number N of the controllers connected to the system is determined (Step c10). If not so, the flow returns to Step c4, and the processing of Step c4 and subsequent steps is carried out. After completion of query on the power ON/OFF of all the controllers, the flow returns to Step c1, and waits for the next query.

As explained above, the relay computer 5 notifies the monitoring computer of the power status change only when there occurs a change in the power status.

The monitoring computer executes monitoring task processing shown in FIG. 10. First, predetermined time is set in a monitoring timer and started (Step d1), and a determination is made whether a notification of power ON/OFF change is received from the notification task of the relay computer 5 (Step d2) before the set time elapses (Step d4). If such notification is received, a power ON/OFF flag is set that corresponds to the controller for which the power ON/OFF change has been notified (Step d3).

When the monitoring timer is up, the index i is set to "1" (Step d5), and whether or not the power ON/OFF flag for the controller i is ON is determined (Step d6). If the power ON/OFF flag is not ON, monitoring-skip processing is performed without communicating with the controller i (Step d13), and the flow proceeds to Step d10. If the power flag is ON, a determination is made whether there occurs a change from OFF to ON during the time from after the preceding monitoring task processing to the present processing (Step d7). If there is a change from OFF to ON, processing at power supply restoration is performed (Step d8), and communication with the controller i is performed to receive data (Step d9). If a change from OFF to ON does not occur, the flow proceeds from Step d7 to Step d9 wherein the communication with the controller i is performed for data receipt.

Subsequently, the status of the power ON/OFF flag at the present processing is stored (Step d10), and the index i is incremented by one (Step d11). Then, whether or not the index i exceeds the number N of the controllers connected to the system is determined (Step d12). If not so, the flow returns to Step d6. If the number N of the controllers is exceeded, the flow returns to Step d1, and the processing at Step d1 and subsequent steps is carried out.

The second embodiment can be utilized in the first embodiment, so that the monitoring computer of the first embodiment may perform the power status determination task, the notification task, and the monitoring task.

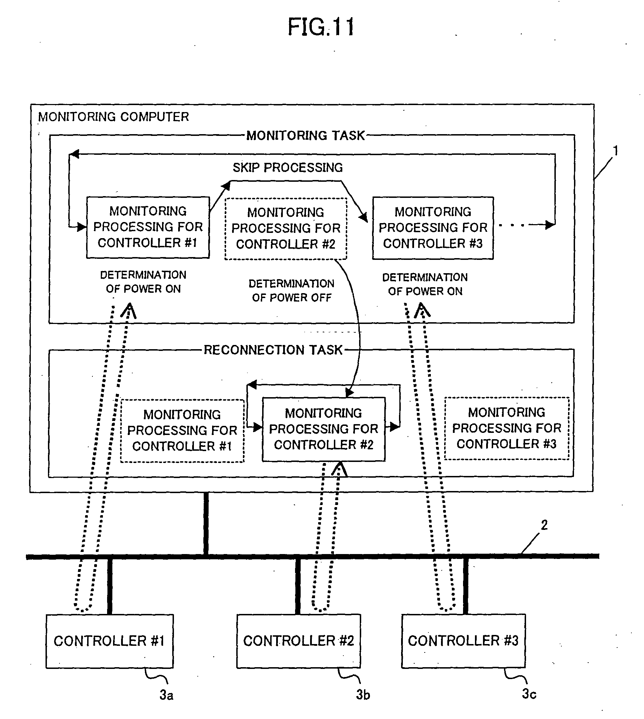

FIG. 11 is a view for explaining operations of a third embodiment of the present invention. The third embodiment is suited to a case, for example, where power-ON information cannot be transmitted from the controller 3a, 3b, or 3c to the monitoring computer 1. The third embodiment contemplates minimizing a communication timeout caused when the monitoring task communicates with the controller 3a, 3b or 3c which is in a power OFF state. FIG. 12 shows an algorithm of monitoring task processing in the third embodiment, and FIG. 13 shows an algorithm of reconnection task processing.

In the third embodiment, when a communication timeout occurs as a result of the monitoring task communicating with either one of the controllers that is in a power OFF state, such controller is disconnected from the monitoring task in subsequent cycles, so as to be moved to the reconnection task. The reconnection task communicates at regular intervals with the controller which is in the power OFF state and handled by this task. If the communication is successfully performed, the controller is disconnected from the reconnection task and returned to the monitoring task. In this way, the monitoring task allows the communication timeout to occur only once in the communication with the controller that is in power OFF state, and subsequently skips the communication therewith, whereby occurrences of timeout can be suppressed to a minimum. When the power ON state is restored, the processing in the monitoring task is resumed.

In the monitoring task executed by the monitoring computer 1 in the third embodiment, predetermined time is set in the monitoring timer and started (Step e1) When the set timer elapsed (Step e2), the index i is set to "1" (Step e3), and whether or not the controller i is an object of the monitoring task is determined (Step e4). If the controller i is not the object of the monitoring task, the flow proceeds to Step e8. If the controller i is the object of the monitoring task, data reception processing with the controller i is performed (Step e5). Next, it is determined whether or not the data reception is completed successfully (Step e6). If so, the flow proceeds to Step e8. If not so, it is determined that the power supply to the controller i is OFF, and the controller i is removed from a list of objects of the monitoring task and changed to a processing object of the reconnection task (Step e7).

Then, the index i is incremented by one (Step e8). If the index i does not exceed the number N of the controllers connected to the system (Step e9), the flow returns to Step e4. If the index i exceeds the number N of the controllers, the flow returns to Step e1, and the processing of Step e1 and subsequent steps is executed.

As explained above, the monitoring task recognizes, as an object, any controller whose power is ON and communicates therewith to receive data. When any controller whose power is turned OFF is detected based on the fact that the communication therewith cannot be performed, such controller is removed from objects of the monitoring task and changed to an object of the reconnection task.

In the reconnection task, processing shown in FIG. 13 is executed. First, predetermined time is set in a reconnection timer and the timer is started (Step f1). When the set time elapsed (Step f2), the index i is set to "1" (Step f3), and it is determined whether or not the controller i is an object of the reconnection task (Step f4). If the controller i is not an object of the reconnection task, the flow proceeds to Step f8. If the controller i is an object of the reconnection task, data reception processing with the controller i is performed (Step f5). Next, it is determined whether or not the data reception is completed successfully (Step f6). If the data reception cannot be completed, the flow proceeds to Step f8. If the data reception can be completed, it is determined that the power supply to the controller i is ON. Then, the processing at power supply restoration is performed, and the controller i is removed from a list of objects of the reconnection task and is changed to a processing object of the monitoring task (Step f7). Subsequently, the index i is incremented by "1" (Step S8). If the index i does not exceed the number N of the controllers connected to the system (Step f9), the flow returns to Step f4. If the index i exceeds the number N of the controllers, the flow returns to Step f1, and the processing of Step f1 and subsequent steps is performed.

## Claims

1. A managing system comprising:
a plurality of controllers for controlling respective machines; and
a managing device connected to said controllers through a network for monitoring statuses of said controllers by reading information on said controllers through the network,
wherein each of said controllers includes transmission means for transmitting power-ON information indicating power-ON status to said managing device at predetermined intervals while power of the controller is turned ON, and said managing device determines power-OFF status for a controller from which the power-ON information has been received within a predetermined time period and skips reading of information on the controller which is determined to be power-OFF status.

2. A managing system according to claim 1, wherein said managing device starts reading of information on the controller which has been determined to be power-OFF status when the power-ON information is received from the controller.

3. A managing system according to claim 1, wherein each of said controllers includes means for setting the interval at which the power-ON information is transmitted, means for attaching additional information to the power-ON information, and means for setting a condition on which the additional information is transmitted with the power-ON information.

4. A managing system comprising:
a plurality of controllers for controlling respective machines;
a managing device connected to said controllers through a network for monitoring statuses of said controllers by reading information on said controllers through the network; and
a relay device provided between said controllers and said managing device,
wherein each of said controllers includes transmission means for transmitting power-ON information indicating power-ON status to said relay device at predetermined intervals while power of the controller is turned ON, said relay device determines power ON/OFF status of each of said controllers based on where or not the power-ON information has been received therefrom within a predetermined time period, and makes a notification of a change of the power ON/OFF status of any of said controllers to said managing device, and said managing device skips reading information on the controller of power-OFF status according to the notification from said relay device.

5. A managing system according to claim 4, wherein said managing device starts reading of information on the controller which has been determined to be power-OFF status when a change of the power ON/OFF status of the controller is notified from said relay device.

6. A managing system according to claim 4, wherein each of said controllers includes means for setting the interval at which the power-ON information is transmitted, means for attaching additional information to the power-ON information, and means for setting a condition on which the additional information is transmitted with the power-ON information.

7. A managing system comprising:
a plurality of controllers for controlling respective machines; and
a managing device connected to said controllers through a network for monitoring statuses of said controllers by reading information on said controllers through the network,
wherein said managing device performs; a monitoring task of communicating with said controllers in a list of managing task objects and removing a controller from which any data are not received from the list of the monitoring task objects and recording the controller in a list of reconnection task objects, and communicating with only the controllers included in the list of the monitoring task objects to receive the information therefrom, and a reconnection task of communicating with each of controllers included in the list of the reconnection task objects and recording a controller from which the information are received successfully in the list of the monitoring task objects.
